# FASCICULE DE BREVET EUROPEEN

(11) **EP 0 594 489 B1**
(45) Date de publication et mention de la délivrance du brevet: **15.05.1996**
(21) Numéro de dépôt: 93402554.5
(22) Date de dépôt: 18.10.1993
(51) Int. Cl.: C01B 21/14

(54) **Procédé de conversion continue d'un sel d'hydroxylamine en un autre sel d'hydroxilamine**
Verfahren zur kontinuierlichen Umwandlung eines Hydroxylamin-salzes in ein anderes Hydroxylamin-salz
Process for the continuous conversion of a hydroxylamine salt in another hydroxylamine salt

(30) Priorité: 19.10.1992 FR 9212485
(43) Date de publication de la demande: 27.04.1994
(73) Titulaire: SOCIETE GENERALE POUR LES TECHNIQUES NOUVELLES S.G.N., F-78182 Saint-Quentin-en-Yvelines Cédex (FR)
(72) Inventeur: Pareau, Dominique, F-91370 Verrieres-Le-Buisson (FR); Chesne, André, F-78110 Le Vesinet (FR); Durand, Gérard, F-78230 Le Pecq (FR); De Rubercy, Michel, F-78110 Le Vesinet (FR)
(74) Mandataire: Le Roux, Martine

(56) Documents cités:
- FR-A- 2 111 277
- FR-A- 2 206 270
- FR-A- 2 243 904

## Description

La présente invention a pour objet un procédé de conversion continue d'un sel d'hydroxylamine en un autre sel d'hydroxylamine, applicable notamment à la transformation d'un sulfate ou un chlorure d'hydroxylamine en un nitrate ou un formiate d'hydroxylamine.

On sait qu'au cours du retraitement des combustibles nucléaires irradiés, on est amené à employer certains réducteurs tels que les sels d'hydroxylamine. Le nitrate et le formiate d'hydroxylamine, entre autres, sont particulièrement intéressants dans cette utilisation. Malheureusement, lesdits sels sont peu stables et d'un prix de revient élevé.

On propose selon l'invention, pour la préparation de tels sels, un procédé avantageux.

Ledit procédé est un perfectionnement au procédé décrit dans la demande FR-A-2 206 270.

Selon l'enseignement de ladite demande, on met en oeuvre successivement, avec un solvant organique renfermant un extractant du cation hydroxylamine, une extraction puis une désextraction liquide-liquide à contre-courant.

Au cours de cette extraction, on fait intervenir l'extractant sous forme normale ou sous forme salifiée. On fait avantageusement intervenir l'acide di-2-éthyl-hexyl-phosphorique sous forme de son sel de sodium, ledit sel ayant été généré par mise en contact à contre-courant dudit acide avec une solution de carbonate de sodium.

Selon un premier aspect de la présente invention, la demanderesse a mis en évidence l'intérêt qu'il y a à faire intervenir l'extractant sous forme acide et salifiée.

Le procédé de l'invention consiste donc en un procédé de conversion continue d'un sel d'hydroxylamine en un autre sel d'hydroxylamine. Il est applicable notamment à la conversion d'un sulfate ou chlorure d'hydroxylamine en un nitrate ou formiate d'hydroxylamine, et tout particulièrement à la conversion dudit sulfate en ledit nitrate. Il comprend les étapes:
- d'extraction du cation hydroxylamine de la solution de sel de départ par mise en contact à contre-courant de ladite solution avec un solvant renfermant un extractant dudit cation hydroxylamine (extraction liquide-liquide);
- de désextraction dudit cation par mise en contact à contre-courant dudit solvant renfermant l'extractant chargé en ledit cation avec une solution aqueuse dont l'anion est celui du sel d'hydroxylamine que l'on souhaite obtenir (extraction liquide-liquide);
- de recyclage dudit solvant renfermant l'extractant, après régénération basique (salification) de celui-ci.

Il se caractérise en ce que ladite extraction est mise en oeuvre avec un extractant partiellement salifié. De façon caractéristique, à l'entrée de la batterie d'extraction, on trouve selon le procédé de l'invention, au sein du solvant, l'extractant sous forme salifiée et sous forme acide.

Avantageusement, ledit extractant intervient à l'extraction principalement sous forme salifiée mais, dans un certain pourcentage molaire, sous forme acide.

Ledit extractant peut notamment intervenir, à l'entrée du premier étage de l'extraction, jusqu'à 10 % en mole, sous forme acide.

Pour alimenter la batterie d'extraction avec le solvant renfermant l'extractant partiellement salifié - ledit solvant renfermant, à la sortie de la batterie de désextraction, ledit extractant sous forme acide - on peut imaginer plusieurs façons de procéder.

Selon une première variante, après la désextraction, on ne soumet à la régénération (salification) qu'une partie de l'extractant. A cette fin, on détourne, avant l'étape de régénération, une partie du flux du solvant, ladite partie étant recyclée directement à l'extraction et renfermant donc l'extractant sous forme acide. Cette partie du flux du solvant renfermant l'extractant sous forme acide est avantageusement mélangée à l'autre partie du flux du solvant renfermant l'extractant sous forme salifiée (partie ayant subi la régénération) avant l'entrée dans la batterie d'extraction.

Selon une seconde variante, après la désextraction, on régénère tout l'extractant. Le solvant recyclé à l'extraction ne contient donc l'extractant que sous forme salifiée et il est alors nécessaire de faire intervenir un acide, à l'entrée du premier étage de l'extraction, pour générer de l'extractant sous forme acide.

Quelle que soit la façon de procéder pour introduire, à l'extraction, l'extractant sous forme partiellement salifiée ou partiellement sous forme acide, on a constaté, selon l'invention, que cette salification partielle entraîne une amélioration du rendement du procédé de conversion.

Il apparaît que la présence d'extractant sous forme acide limite le développement d'une réaction parasite.

Selon un deuxième aspect de la présente invention, la demanderesse a montré qu'il est possible et avantageux de faire intervenir au sein du solvant une forte teneur en extractant.

Le procédé de conversion selon l'invention est avantageusement mis en oeuvre avec un solvant renfermant plus de 10 % en volume d'extractant, renfermant avantageusement de 20 à 25 % en volume d'extractant.

En faisant intervenir au sein du solvant (solvant = extractant + diluant + modificateur), la quantité adéquate de modificateur, il s'est avéré possible avec de telles teneurs en extractant, d'éviter l'apparition néfaste d'une troisième phase (deuxième phase organique).

L'homme de l'art ne peut ignorer les avantages qui découlent de cet enrichissement du solvant en extractant. Celui-ci contribue notamment à l'augmentation du rendement et à l'optimisation de l'appareillage et de sa conduite.

Selon d'autres aspects du procédé de l'invention:
- le solvant renfermant l'extractant chargé en cation NH₃OH⁺, à la sortie de l'extraction, est lavé par une solution d'acide dilué avant de subir la désextraction. Avantageusement, la solution de lavage est utilisée pour diluer la solution de sel de départ;
- les raffinats d'extraction sont utilisés lorsque cela est possible dans l'étape de régénération de l'extractant. On diminue ainsi la quantité d'effluents à rejeter;
- en cours de régénération de l'extractant, après contact avec la base, le solvant est avantageusement lavé. On évite ainsi d'entraîner trop de base avec ledit solvant.

On précise ci-après, de façon nullement limitative, les composés chimiques qui peuvent intervenir dans le procédé de l'invention.

L'extractant consiste avantageusement en un acide alkylphosphorique, de préférence en l'acide di-2-éthyl-hexyl-phosphorique.

Le solvant consiste en un mélange dudit extractant, d'un diluant paraffinique et d'un modificateur.

A titre de diluant paraffinique, on peut notamment utiliser le dodécane, le TPH ou le kérosène. Le TPH ou tétrapropylène hydrogéné est un produit commercial connu de l'homme du métier. Il s'agit d'un mélange industriel de dodécanes ramifiés.

A titre de modificateur, on peut notamment utiliser un alcool lourd tel que l'octanol-1 ou le 2-éthyl-hexanol, une cétone ou le tributylphosphate.

Selon une variante préférée, le procédé de l'invention est mis en oeuvre avec un solvant contenant 20 % en volume d'acide di-2-éthyl-hexylphosphorique, 10 % en volume d'octanol-1, 70 % en volume de diluant.

Ledit acide est avantageusement transformé au cours de l'étape de régénération, en son sel de sodium. On n'exclut pas sa conversion en sel de potassium...

On peut utiliser, pour ladite régénération basique de la soude (NaOH), de la potasse (KOH), du carbonate de sodium (Na₂CO₃), du bicarbonate de sodium (NaHCO₃)...

On utilise généralement la soude ou le carbonate de sodium qui sont des produits industriels courants.

Parmi lesdits produits industriels courants, on préfère la soude, qui peut être utilisée très concentrée.

Lorsque ladite soude est employée seule, on a noté des pertes en extractant du fait de la solubilité du sel de sodium de celui-ci en phase aqueuse.

En présence de sulfate de sodium, ces pertes sont réduites. On utilise donc avantageusement pour la régénération de l'extractant une solution de soude et de sulfate de sodium.

Comme indiqué ci-dessus, ledit sulfate de sodium est alors avantageusement apporté avec les raffinats d'extraction recyclés. Il est de préférence apporté en aval de la soude par rapport au flux de solvant pour limiter l'entraînement de celle-ci. Il permet ainsi de laver le solvant, après son contact avec ladite soude.

Le procédé de l'invention, qui présente avantageusement les différentes caractéristiques énoncées ci-dessus, a sur celui décrit dans la demande FR-A-2 206 270 les avantages ci-après:
- meilleur rendement
- quantité d'effluents moindre,
- appareillage de moindre volume et donc de conduite plus aisée.

Pour l'obtention de nitrate d'hydroxylamine, à partir de sulfate d'hydroxylamine, on extrait les cations d'hydroxylamine d'une solution aqueuse de sulfate d'hydroxylamine et on désextrait avec une solution aqueuse d'acide nitrique.

Avantageusement, à cette fin:
- l'extraction est réalisée par mise en contact à contre-courant de la solution aqueuse de sulfate d'hydroxylamine et d'un solvant renfermant dans un mélange de TPH et d'octanol-1, à titre d'extractant, de l'acide di-2-éthyl-hexyl-phosphorique et du di-2-éthyl-hexyl-phosphate de sodium;
- la désextraction est réalisée par mise en contact à contre-courant dudit solvant renfermant ledit extractant chargé en le cation hydroxylamine avec une solution aqueuse d'acide nitrique;
- la régénération dudit acide di-2-éthyl-hexyl-phosphorique est réalisée par mise en contact à contre-courant de celui-ci avec une solution aqueuse de soude et une solution aqueuse de sulfate de sodium consistant en les raffinats d'extraction.

De préférence, on assure, à la régénération, la transformation de tout l'acide di-2-éthyl-hexyl-phosphorique en son sel de sodium et on fait intervenir, à l'entrée du premier étage de l'extraction, un acide -acide nitrique- pour générer de l'acide di-2-éthyl-hexyl-phosphorique.

Avantageusement, entre l'extraction et la désextraction, on lave le solvant renfermant l'extractant chargé par de l'acide nitrique dilué.

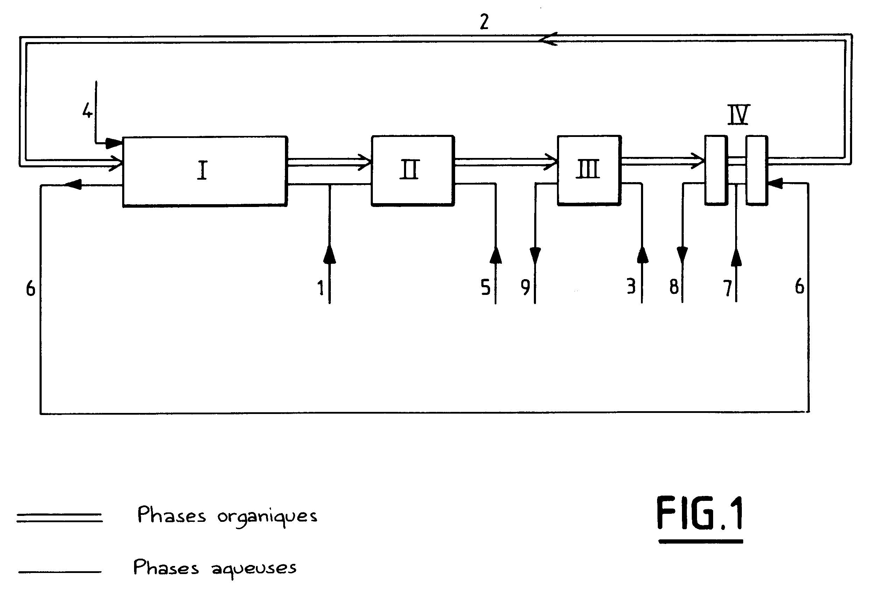

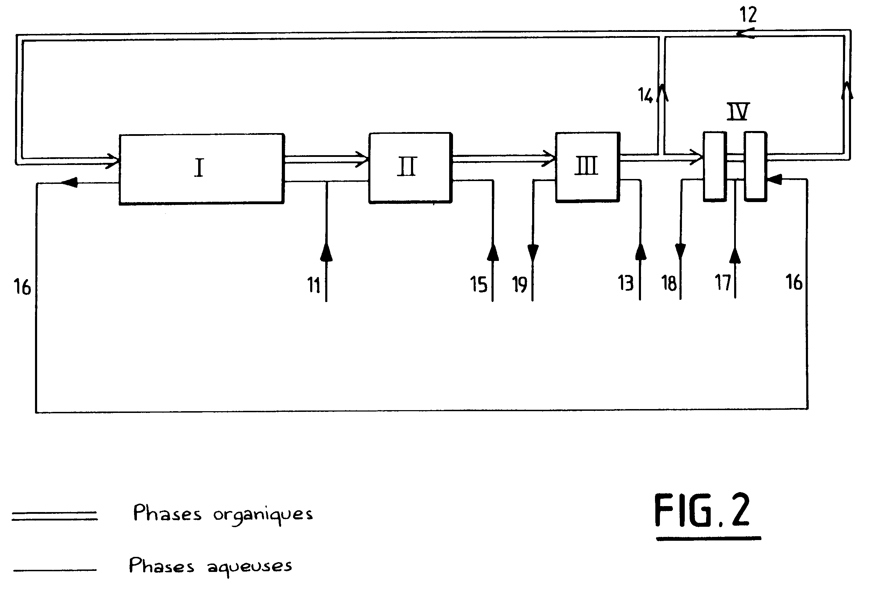

Le procédé de l'invention est maintenant décrit en référence aux deux figures annexées sur lesquelles: - Fig. 1 schématise une première variante préférée dudit procédé; - Fig. 2 schématise une seconde variante préférée.

Sur ces deux figures, on a représenté en chiffres romains les principales étapes dudit procédé ; à savoir;
- en I :: l'étape d'extraction
- en II :: l'étape de lavage
- en III :: l'étape de désextraction
- en IV :: I'étape de régénération.

Ces différentes étapes sont mises en oeuvre dans des batteries de mélangeurs-décanteurs.

On a par ailleurs représenté par une ligne double (=) le circuit parcouru par la phase organique (solvant) et par une ligne simple (-) les circuits parcourus par des phases aqueuses.

En référence à la figure 1 :
La solution de sel d'hydroxylamine de départ 1 passe dans la batterie d'extraction I à contre-courant du solvant 2 renfermant l'extractant du cation hydroxylamine. Ledit extractant a été totalement salifié en IV. Selon l'invention, l'extraction est mise en oeuvre avec un extractant partiellement salifié. A cette fin, on fait intervenir, selon la variante illustrée, un courant d'acide 4.

Le solvant chargé en cation NH₃OH⁺ est ensuite lavé en II. La solution de lavage 5 - avantageusement une solution aqueuse légèrement acide - est utilisée pour diluer la solution à extraire 1.

Le solvant lavé passe alors dans la batterie de désextraction III où il circule à contre-courant d'une solution 3 dont l'anion est celui du sel d'hydroxylamine que l'on désire obtenir. On récupère en 9 ledit sel d'hydroxylamine désiré.

Après la désextraction III, l'extractant, sous forme acide, est régénéré (salifié) en IV par mise en contact à contre-courant avec une solution basique.

Selon la variante préférée illustrée, le solvant est tout d'abord mis en contact à contre-courant avec une solution de soude (NaOH) 7 mélangée à une solution de sulfate de sodium. Ce solvant est ensuite lavé avec une solution de sulfate de sodium 6. Il s'agit des raffinats d'extraction.

La solution 8 est éliminée comme déchet liquide.

Comme précisé ci-dessus, l'utilisation des raffinats 6 est particulièrement intéressante en ce qu'elle limite les rejets et les pertes en hydroxylamine.

En référence à la figure 2:
La solution de sel d'hydroxylamine de départ 11 passe dans la batterie d'extraction I à contre-courant du solvant 12 + 14 renfermant l'extractant du cation hydroxylamine. Une partie dudit extractant a été salifié en IV.

Le solvant chargé en cation NH₃OH⁺ est ensuite lavé en II.

La solution de lavage 15 - avantageusement une solution aqueuse légèrement acide - est utilisée pour diluer la solution à extraire 11.

Le solvant lavé passe alors dans la batterie de désextraction III où il circule à contre-courant d'une solution 13 dont l'anion est celui du sel d'hydroxylamine que l'on désire obtenir. On récupère en 19 ledit sel d'hydroxylamine désiré.

Après la désextraction III, tout le flux du solvant contenant l'extractant sous forme acide ne passe pas à la régénération IV. On détourne en 14 une partie de ce flux pour recyclage de l'extractant qu'il contient, sous forme acide. L'autre partie dudit flux est régénérée en IV d'une manière analogue à celle décrite en référence à la figure 1. On fait intervenir pour ladite régénération en 17 une solution basique (avantageusement, il s'agit d'une solution de soude concentrée) et en 16 les raffinats d'extraction (solution de Na₂SO₄).

La solution 18 est éliminée comme déchet liquide.

On précise ci-après, à titre illustratif, un exemple de mise en oeuvre du procédé de l'invention.

La variante exemplifiée est celle représentée sur la figure 1. Il s'agit de préparer du nitrate d'hydroxylamine à partir de sulfate d'hydroxylamine.

L'extractant est constitué d'un mélange de di-2-éthyl-hexylphosphate de sodium (0,53 mol/l ± 0,01) et d'acide di-2-éthyl-hexylphosphorique (0,05 ± 0,01 mol/l).

Cet extractant se trouve dissous dans un mélange de dodécane ramifié -le tétrapropylène hydrogéné ou TPH distribué par la Société PROCHROM - et d'octanol-1, la proportion en volume de TPH étant 7 fois celle de l'octanol.

Le solvant ainsi défini (extractant + diluant + modificateur) est mis en contact à contre-courant dans une batterie de mélangeurs-décanteurs BI avec une solution aqueuse de sulfate d'hydroxylamine (1): 1 mol/l de débit A (A étant pris comme débit de référence dans la suite de cette description). Les débits respectifs de ces solutions sont dans le rapport org/aq de 4.

Dans l'étape suivante, le solvant est lavé également à contre-courant dans une batterie BII par une solution aqueuse d'acide nitrique (5): 0,2 mol/l de débit A, égal à celui de la solution aqueuse de sulfate d'hydroxylamine (1) introduite dans la batterie BI. Après passage dans BII, cette solution aqueuse rejoint le flux de sulfate d'hydroxylamine (1) alimentant BI. Le solvant sortant de BII rencontre, à contre-courant, dans la batterie BIII, une solution aqueuse d'acide nitrique (3): 3 mol/l dont le débit est 0,7 A. La solution aqueuse effluente (9) constitue le produit recherché : une solution de nitrate d'hydroxylamine. Le solvant sortant de BIII est traité dans une batterie BIV. Il rencontre, dans le premier étage, une solution aqueuse contenant un excès de soude (7), donc capable de le transformer intégralement en sel de sodium et, dans le second étage, une solution aqueuse de sulfate de sodium (6).

Cette dernière solution (6) est le raffinat de la batterie BI. En quittant l'étage 2 de la batterie BIV, elle est mélangée avec une solution de soude (7): 10 mol/l de débit 0,28 A et l'ensemble alimente l'étage 1 de l'étape de régénération du solvant.

A la sortie de BIV, la solution aqueuse (8) est éliminée comme déchet liquide. Le solvant recyclé contient l'extractant intégralement sous forme de sel de sodium. Un débit de 0,11 A d'acide nitrique (4): 1,5 mol/l introduit avec le solvant dans la batterie BI permet d'atteindre la teneur souhaitée en acide di-2-éthyl-hexyl-phosphorique dans l'extractant.

L'installation comporte des batteries de mélangeurs-décanteurs de 8, 4, 3 et 2 étages respectivement pour l'extraction I, le lavage II, la désextraction III, la régénération IV.

L'opération s'effectue en continu pendant 100 heures. Les résultats obtenus sont les suivants:

| Produit fini : solution aqueuse (9) contenant : | |
|---|---|
| NH₃OH NO₃ | 2,35 mol/l |
| HNO₃ | 0,22 mol/l |

teneur en sodium 4 mg/l, soit un rapport molaire Na/NH₃OH de 7,4 10⁻⁵ teneur en sulfate 3,5 mg/l, soit un rapport molaire SO₄/NH₃OH de 1,5 10⁻⁵

| Perte en hydroxylamine : | | |
|---|---|---|
| raffinat | NH₃OH⁺ | 0,03 mol/l |
| | NH₂OH | 0,015 mol/l |
| solvant | NH₃OH⁺ | <0,001 mol/l |

Ainsi, grâce au procédé conforme à l'invention, on obtient une solution de nitrate d'hydroxylamine avec un excellent degré de pureté et une concentration importante. Le rendement global de l'opération est de 95 %.

## Revendications

1. Procédé de conversion continue d'un sel d'hydroxylamine en un autre sel d'hydroxylamine, applicable notamment à la conversion d'un sulfate ou chlorure d'hydroxylamine en un nitrate ou formiate d'hydroxylamine et comprenant notamment:
- l'extraction (I) du cation hydroxylamine de la solution (1) de sel de départ par mise en contact à contre-courant de ladite solution (1) avec un solvant (2) renfermant un extractant dudit cation hydroxylamine ;
- la désextraction (III) dudit cation par mise en contact à contre-courant dudit solvant renfermant l'extractant chargé en ledit cation avec une solution aqueuse (3) dont l'anion est celui du sel d'hydroxylamine que l'on souhaite obtenir ;
- le recyclage dudit solvant (2) renfermant l'extractant après régénération (IV) basique de celui-ci ;
ledit procédé étant caractérisé en ce que ladite extraction (I) est mise en oeuvre avec un extractant partiellement salifié.

2. Procédé selon la revendication 1, caractérisé en ce que l'extractant à l'entrée du premier étage de l'extraction (I) intervient, jusqu'à 10 % en mole, sous forme acide.

3. Procédé selon l'une des revendications 1 ou 2, caractérisé en ce que, après la désextraction (III), l'extractant, sous forme acide, est salifié, au cours de l'étape de régénération (IV), totalement ou en partie seulement avant son recyclage à l'extraction (I).

4. Procédé selon la revendication 3, caractérisé en ce que l'extractant est totalement salifié dans ladite étape de régénération (IV) et en ce qu'un acide (4) est alors introduit à l'entrée du premier étage de l'extraction (I).

5. Procédé selon l'une quelconque des revendications 1 à 4, caractérisé en ce que le solvant (2) a une teneur en extractant supérieure à 10 % en volume, avantageusement comprise entre 20 et 25 % en volume.

6. Procédé selon l'une quelconque des revendications 1 à 5, caractérisé en ce que, entre l'extraction (I) et la désextraction (III), le solvant renfermant l'extractant chargé est lavé (II) par une solution d'acide dilué (5).

7. Procédé selon l'une quelconque des revendications 1 à 6, caractérisé en ce que les raffinats d'extraction (6) sont utilisés dans l'étape de régénération (IV) de l'extractant.

8. Procédé selon l'une quelconque des revendications 1 à 7, caractérisé en ce qu'en cours de régénération (IV) de l'extractant, après contact avec la base, le solvant est lavé.

9. Procédé selon l'une quelconque des revendications 1 à 8, caractérisé en ce que l'extractant consiste en un acide alkylphosphorique, avantageusement en l'acide di-2-éthyl-hexyl-phosphorique.

10. Procédé selon l'une quelconque des revendications 1 à 9, caractérisé en ce que le solvant consiste en un mélange dudit extractant, d'un diluant paraffinique, tel que le dodécane, le TPH, le kérosène et d'un modificateur choisi parmi les alcools lourds tels que l'octanol-1, le 2-éthylhexanol, les cétones, le tri-butylphosphate.

11. Procédé selon la revendication 10, caractérisé en ce que ledit solvant contient 20 % en volume d'acide di-2-éthyl-hexyl-phosphorique, 10 % en volume d'octanol-1 et 70 % en volume de diluant.

12. Procédé selon la revendication 1 pour la conversion d'un sulfate d'hydroxylamine en un nitrate d'hydroxylamine, caractérisé en ce que :
- l'extraction (I) est réalisée par mise en contact à contre-courant d'une solution aqueuse de sulfate d'hydroxylamine (1) avec un solvant (2) renfermant dans un mélange de TPH et d'octanol-1, à titre d'extractant, de l'acide di-2-éthylhexyl-phosphorique et du di-2-éthyl-hexyl-phosphate de sodium ;
- la désextraction (III) est réalisée par mise en contact à contre-courant dudit solvant renfermant ledit extractant chargé en le cation hydroxylamine avec une solution aqueuse d'acide nitrique (3) ;
- la régénération (IV) dudit acide di-2-éthyl-hexyl-phosphorique est réalisée par mise en contact à contre-courant de celui-ci avec une solution aqueuse de soude (7) et une solution aqueuse de sulfate de sodium (6) consistant en les raffinats d'extraction.

## Claims

1. A process for the continuous conversion of a hydroxylamine salt into another hydroxylamine salt, applicable especially to the conversion of hydroxylamine sulfate or chloride into hydroxylamine nitrate or formate and comprising in particular:
- the extraction (I) of the hydroxylamine cation from the initial salt solution (1) by bringing said solution (1) into contact, in countercurrent, with a solvent (2) containing an extractant for said hydroxylamine cation;
- the re-extraction (III) of said cation by bringing said solvent containing the extractant charged with said cation into contact, in countercurrent, with an aqueous solution (3) whose anion is that of the hydroxylamine salt which it is desired to obtain; and
- the recycling of said solvent (2) containing the extractant, after basic regeneration (IV) of the latter,
wherein said extraction (I) is carried out with a partially salified extractant.

2. A process according to claim 1 wherein up to 10 mol % of the extractant used is in the acid form at the inlet of the first extraction stage (I).

3. A process according to one of claims 1 or 2 wherein, after the re-extraction (III), the extractant in the acid form is totally or only partially salified during the regeneration step (IV) before it is recycled to the extraction (I).

4. A process according to claim 3 wherein the extractant is totally salified in said regeneration step (IV) and wherein an acid (4) is then introduced at the inlet of the first extraction stage (I).

5. A process according to any one of claims 1 to 4 wherein the proportion of extractant in the solvent (2) is greater than 10% by volume and advantageously between 20 and 25 % by volume.

6. A process according to any one of claims 1 to 5 wherein the solvent containing the charged extractant is washed (II) with a dilute solution of acid (5) between the extraction (I) and the re-extraction (III).

7. A process according to any one of claims 1 to 6 wherein the extraction raffinates (6) are used in the extractant regeneration step (IV).

8. A process according to any one of claims 1 to 7 wherein the solvent is washed during regeneration (IV) of the extractant, after it has been in contact with the base.

9. A process according to any one of claims 1 to 8 wherein the extractant consists of an alkylphosphoric acid, advantageously di-2-ethylhexylphosphoric acid.

10. A process according to any one of claims 1 to 9 wherein the solvent consists of a mixture of said extractant, a paraffinic diluent such as dodecane, HTP or kerosene, and a modifier selected from heavy alcohols such as octan-1-ol and 2-ethylhexanol, ketones and tributyl phosphate.

11. A process according to claim 10 wherein said solvent contains 20 % by volume of di-2-ethylhexylphosphoric acid, 10% by volume of octan-1-ol and 70% by volume of diluent.

12. A process according to claim 1 for the conversion of hydroxylamine sulfate into hydroxylamine nitrate, wherein:
- the extraction (I) is carried out by bringing an aqueous solution of hydroxylamine sulfate (1) into contact, in countercurtent, with a solvent (2) containing di-2-ethylhexylphosphoric acid and sodium di-2-ethylhexylphosphate as the extractant in a mixture of HTP and octan-1-ol;
- the re-extraction (III) is carried out by bringing said solvent containing said extractant charged with the hydroxylamine cation into contact, in countercurtent, with an aqueous solution of nitric acid (3); and
- said di-2-ethylhexylphosphoric acid is regenerated (IV) by being brought into contact, in countercurrent, with an aqueous solution of sodium hydroxide (7) and an aqueous solution of sodium sulfate (6) consisting of the extraction raffinates.

## Patentansprüche

1. Verfahren zur kontinuierlichen Umwandlung eines Hydroxylamin-Salzes in ein anderes Hydroxylamin-Salz, das insbesondere zur Umwandlung von Hydroxylaminsulfat oder -chlorid in Hydroxylaminnitrat oder -formiat anwendbar ist, das insbesondere folgende Schritte umfaßt:
- Extraktion (I) des Hydroxylamin-Kations aus der Lösung (1) eines Ausgangssalzes durch Inkontaktbringen der Lösung (1) im Gegenstrom mit einem Lösungsmittel (2), das ein Extraktionsmittel für das Hydroxylamin-Kation enthält,
- Reextraktion (III) des Hydroxylamin-Kations durch Inkontaktbringen des Lösungsmittels (2), das das mit dem Hydroxylamin-Kation beladene Extraktionsmittel enthält, im Gegenstrom mit einer wäßrigen Lösung (3), deren Anion das Anion des Hydroxylamin-Salzes ist, das hergestellt werden soll,
- Rückführung des Lösungsmittels (2), das das Extraktionsmittel enthält, nach der basischen Regeneration (IV),
wobei das Verfahren
dadurch gekennzeichnet ist, daß
die Extraktion (I) mit einem Extraktionsmittel durchgeführt wird, das zum Teil in ein Salz übergeführt ist.

2. Verfahren nach Anspruch 1, dadurch gekennzeichnet, daß das Extraktionsmittel am Anfang des ersten Extraktionsschritts (I) zu bis zu 10 Mol-% in Säureform vorliegt.

3. Verfahren nach einem der Ansprüche 1 und 2, dadurch gekennzeichnet, daß nach der Reextraktion (III) das in Säureform vorliegende Extraktionsmittel im Regenerationsschritt (IV) vor seiner Rückführung in den Extraktion (I) ganz oder teilweise in ein Salz übergeführt wird.

4. Verfahren nach Anspruch 3, dadurch gekennzeichnet, daß das Extraktionsmittel im Regenerationsschritt (IV) vollständig in ein Salz übergeführt wird und daß dann am Anfang des ersten Extraktionsschritts (I) eine Säure (4) zugegeben wird.

5. Verfahren nach einem der Ansprüche 1 bis 4, dadurch gekennzeichnet, daß das Lösungsmittel (2) einen Gehalt an Extraktionsmittel aufweist, der größer als 10 Vol.-% ist und vorteilhaft 20 bis 25 Vol.-% beträgt.

6. Verfahren nach einem der Ansprüche 1 bis 5, dadurch gekennzeichnet, daß das Lösungsmittel, das das angereicherte Extraktionsmittel enthält, zwischen der Extraktion (I) und der Reextraktion (III) in einem Waschschritt (II) mit einer verdünnten Säurelösung (5) gewaschen wird.

7. Verfahren nach einem der Ansprüche 1 bis 6, dadurch gekennzeichnet, daß die Extraktionsraffinate (6) im Regenerationsschritt (IV), in dem das Extraktionsmittel regeneriert wird, verwendet werden.

8. Verfahren nach einem der Ansprüche 1 bis 7, dadurch gekennzeichnet, daß das Lösungsmittel während der Regeneration (IV) des Extraktionsmittels nach dem Kontakt mit der Base gewaschen wird.

9. Verfahren nach einem der Ansprüche 1 bis 8, dadurch gekennzeichnet, daß das Extraktionsmittel aus einer Alkylphosphorsäure, vorteilhaft Di-2-ethylhexylphosphorsäure, besteht.

10. Verfahren nach einem der Ansprüche 1 bis 9, dadurch gekennzeichnet, daß das Lösungsmittel aus einem Gemisch des obengenannten Extraktionsmittels, eines paraffinischen Verdünnungsmittels, wie z.B. Dodecan, hydriertes Tetrapropylen (TPH) oder Kerosin, und eines Modifizierungsmittels, das unter höheren Alkoholen, wie z.B. 1-Octanol und 2-Ethylhexanol, Ketonen und Tributylphosphat ausgewählt ist, besteht.

11. Verfahren nach Anspruch 10, dadurch gekennzeichnet, daß das Lösungsmittel 20 Vol.-% Di-2-ethylhexylphosphorsäure, 10 Vol.-% 1-Octanol und 70 Vol.-% Verdünnungsmittel enthält.

12. Verfahren nach Anspruch 1 zur Umwandlung eines Hydroxylaminsulfats in ein Hydroxylaminnitrat, dadurch gekennzeichnet, daß
- die Extraktion (I) durch Inkontaktbringen einer wäßrigen Lösung von Hydroxylaminsulfat (1) im Gegenstrom mit einem Lösungsmittel (2), das Di-2-ethylhexylphosphorsäure und Natrium-di-2-ethylhexylphosphat als Extraktionsmittel in einem Gemisch von TPH und 1-Octanol enthält, erfolgt,
- die Reextraktion (III) durch Inkontaktbringen des Lösungsmittels (2), das das mit dem Hydroxylamin-Kation beladene Extraktionsmittel enthält, im Gegenstrom mit einer wäßrigen Salpetersäurelösung (3) durchgeführt wird, und
- die Regeneration (IV) der Di-2-ethylhexylphosphorsäure durch Inkontaktbringen dieser Säure im Gegenstrom mit einer wäßrigen Natriumhydroxidlösung (7) und einer wäßrigen Natriumsulfatlösung (6), die aus den Extraktionsraffinaten besteht, erfolgt.
